# EUROPÄISCHE PATENTSCHRIFT

(11) **EP 4 121 213 B1**
(45) Veröffentlichungstag und Bekanntmachung des Hinweises auf die Patenterteilung: **09.04.2025**
(21) Anmeldenummer: 21707930.0
(22) Anmeldetag: 22.02.2021
(51) Int. Cl.: B04C 5/04, B04C 5/08, B04C 5/13, B04C 5/14, F16J 15/40, F16J 15/34

(54) **ZYKLONABSCHEIDER**
CYCLONE SEPARATOR
SÉPARATEUR À CYCLONE

(30) Priorität: 19.03.2020 DE 102020203516
(43) Veröffentlichungstag der Anmeldung: 25.01.2023
(73) Patentinhaber: EagleBurgmann Germany GmbH & Co. KG, 82515 Wolfratshausen (DE)
(72) Erfinder: TRALMER, Tobias, 82538 Geretsried (DE); BENEDIKT, Simon, 82515 Wolfratshausen (DE)
(74) Vertreter: Hoefer & Partner Patentanwälte mbB
(86) Internationale Anmeldenummer: PCT/EP2021/054313
(87) Internationale Veröffentlichungsnummer: WO 2021/185534

(56) Entgegenhaltungen:
- WO-A1-2005/103447
- WO-A2-2010/015330
- DE-A1- 3 216 105
- GB-A- 769 906
- US-A1- 2014 075 898

## Beschreibung

Die vorliegende Erfindung betrifft einen Zyklonabscheider zum Trennen einer mit Feststoffen beladenen Flüssigkeit in die reine Flüssigkeit und Feststoffe. Ferner betrifft die Erfindung eine Gleitringdichtungsanordnung mit einem erfindungsgemäßen Zyklonabscheider sowie eine Pumpenanordnung mit einem Pumpenrad und einer Gleitringdichtungsanordnung. Zyklonabscheider werden beispielsweise bei Gleitringdichtungsanordnungen verwendet, um ein reines Sperrmedium zu einer Gleitfläche zwischen zwei Gleitringen zu führen. Das Sperrmedium kann beispielsweise von einem abzudichtenden Medium, welches Feststoffe aufweist, abgezogen werden. Ein Anwendungsbeispiel ist beispielsweise in der Papierindustrie, in welcher ein zerkleinerter Holzstoff in eine Flüssigkeit gepumpt wird und die Gleitringdichtungsanordnung zur Abdichtung an der Pumpenwelle vorgesehen ist. Bisherige Zyklonabscheider weisen hier eine seitliche Zuleitung und eine Ableitung auf, welche senkrecht an einem Deckel des Zyklonabscheiders fortgeführt wird. Neben einer umständlichen Verrohrung durch den Abzug der von den Feststoffen getrennten Flüssigkeit durch den Deckel ergeben sich große Nachteile bei einer notwendigen Wartung. Hier muss der Zyklonabscheider vollständig aus der Verrohrung ausgebaut werden. Dadurch ist eine Wartung des Zyklonabscheiders erschwert. Ferner gibt es Anwendungsfälle, bei denen Zyklonabscheider nachträglich in ein Rohrsystem eingebaut werden sollen, um eine Verschmutzung eines einer Gleitringdichtungsanordnung zugeführten Sperrmediums zu reduzieren. Dies ist bisher mit sehr großem Aufwand und insbesondere zusätzlichem großem Verrohrungsaufwand verbunden.

Die WO 2005/103447 A1 beschreibt einen Zyklonabscheider mit einem zylindrischen Körper und einem Zyklonrohr, welches in mehrere Ringstücke unterteilt ist.

Die US 2014/075898 A1 beschreibt einen Zyklonsbscheider mit einem Flügelstück, welches in einem zylindrischen Körper integriert ist und eine axiale Luftströmung radial nach innen umleitet.

Es ist daher Aufgabe der vorliegenden Erfindung, einen Zyklonabscheider bereitzustellen, welcher bei einfachem Aufbau und einfacher, kostengünstiger Herstellbarkeit eine deutlich einfachere Wartung ermöglicht. Ferner ist es Aufgabe der vorliegenden Erfindung, eine Gleitringdichtungsanordnung sowie eine Pumpenanordnung mit einem verbesserten Zyklonabscheider bereitzustellen.

Diese Aufgabe wird durch einen Zyklonabscheider mit den Merkmalen des Anspruchs 1, eine Gleitringdichtungsanordnung mit den Merkmalen des Anspruchs 10 und eine Pumpenanordnung mit den Merkmalen des Anspruchs 11 gelöst. Die Unteransprüche zeigen bevorzugte Weiterbildungen der Erfindung.

Der erfindungsgemäße Zyklonabscheider mit den Merkmalen des Anspruchs 1 weist somit den Vorteil auf, dass der Zyklonabscheider deutlich einfacher und kostengünstiger herstellbar ist. Ferner ist auch eine Wartung des Zyklonabscheiders ohne kompletten Ausbau aus einem Rohrsystem möglich. Weiterhin weist der Zyklonabscheider einen modularen Aufbau auf, so dass durch den Betrieb verschlissene Teile einfach gewechselt werden können. Dies wird erfindungsgemäß dadurch erreicht, dass der Zyklonabscheider einen Basiskörper mit einer Zuleitung, einer Ableitung und einer Ausnehmung aufweist. Die Ausnehmung ist als Sackloch ausgebildet und zu einer Bodenseite des Basiskörpers geöffnet. Weiterhin umfasst der Zyklonabscheider einen Innenkonus mit einem Hohlraum, welcher in der Ausnehmung angeordnet ist. Eine Bodenplatte ist ferner vorgesehen, welche die Ausnehmung am Basiskörper verschließt, wobei die Bodenplatte einen Schmutzmedienanschluss, d.h. einen Anschluss für das abzuführende verschmutzte Medium bzw. Feststoffe, aufweist. Der Hohlraum des Innenkonus ist zum Schmutzmedienanschluss geöffnet. Die Zuleitung mündet seitlich in einem Wandbereich der Ausnehmung des Basiskörpers. Die Ableitung führt von einer Grundfläche der Ausnehmung des Basiskörpers zu einem seitlichen Auslass am Basiskörper. Dadurch kann erreicht werden, dass die Zuleitung seitlich in den Basiskörper führt und die Ableitung an dem Auslass auch seitlich aus dem Basiskörper führt. Somit wird erreicht, dass die Zuleitung und die Ableitung parallel zueinander zum Zyklonabscheider führen und vom Zyklonabscheider wegführen. Weiterhin weist der Zyklonabscheider erfindungsgemäß keinen Deckel mehr auf, an welchem im Stand der Technik das Rohrsystem angeordnet ist, sondern die Bodenplatte, so dass eine Wartung des Zyklonabscheiders und gegebenenfalls ein Austausch einzelner Bauteile von unten möglich ist, wobei der Zyklonabscheider noch im Rohrsystem montiert bleibt. Dadurch wird eine deutlich vereinfachte Wartung und gegebenenfalls auch ein Austausch von Teilen des Zyklonabscheiders möglich. Ferner ist es auch auf einfache Weise durch die im Wesentlichen "In-Line-Anordnung" von Zuleitung und Ableitung möglich, Zyklonabscheider in bestehende Rohrsysteme nachzurüsten.

Des Weiteren umfasst der Zyklonabscheider ein Steigrohr, welches an der Ableitung angeordnet ist und in den Hohlraum des Innenkonus vorsteht. Das Steigrohr ist ein separates Bauteil und häufig großem Verschleiß ausgesetzt. Durch die Möglichkeit, den Zyklonabscheider von unten zu warten, ist auch ein einfacher Austausch des Steigrohrs möglich.

Ferner umfasst das Steigrohr eine Basisplatte und ein Rohrstück, wobei die Basisplatte zwischen dem Innenkonus des Zyklonabscheiders und der Grundfläche der Ausnehmung des Basiskörpers angeordnet ist. Dadurch kann eine einfache Fixierung des Steigrohrs im Zyklonabscheider durch ein Klemmen zwischen dem Innenkonus und dem Basiskörper ermöglicht werden.

Des Weiteren ist auch der Innenkonus als austauschbares separates Element vorgesehen. Insbesondere ist der Innenkonus aus Keramik hergestellt. Dies hat den Vorteil, dass der Innenkonus nicht aus einem Vollmaterial hergestellt werden muss, sondern beispielsweise gesintert werden kann.

Des Weiteren weist der Innenkonus eine Verbindungsöffnung auf, wobei die Zuleitung an der Verbindungsöffnung des Innenkonus mündet. Dadurch wird das zugeführte Medium, welches beispielsweise Flüssigkeit und Feststoffe umfasst, durch die Zuleitung und die Verbindungsöffnung in den Innenkonus zugeführt.

Ein besonders kompakter und einfacher Aufbau ist möglich, wenn sich ein Einlass der Zuleitung und der seitliche Auslass der Ableitung am Basiskörper um 180° entgegengesetzt zueinander angeordnet sind. Dies ermöglicht insbesondere einen sehr einfachen Einbau in ein bestehendes Rohrsystem, beispielsweise in einem geraden Rohrbereich des Rohrsystems.

Weiter bevorzugt umfasst der Zyklonabscheider ferner eine Verdrehsicherung zwischen dem Innenkonus und der Bodenplatte des Zyklonabscheiders. Dadurch wird im Betrieb ein Verdrehen des Innenkonus vermieden. Die Verdrehsicherung umfasst besonders bevorzugt einen Stift, welcher zwischen dem Innenkonus und der Bodenplatte angeordnet ist.

Der Innenkonus weist dabei besonders bevorzugt einen zylindrischen Bereich auf, in welchem die Verbindungsöffnung angeordnet ist.

Um eine zusätzliche Beschleunigung des zugeführten Mediums zu erreichen, weist die Verbindungsöffnung vorzugsweise eine derartige Form auf, dass sich die Verbindungsöffnung in Richtung zum Hohlraum des Innenkonus verjüngt, insbesondere konisch verjüngt. Dadurch wird eine vergrößerte Einströmgeschwindigkeit in den Hohlraum des Innenkonus erreicht, was eine Separation der Flüssigkeit von den Feststoffen weiter unterstützt.

Um eine möglichst kurze Ableitung innerhalb des Basiskörpers aufzuweisen, weist die Ableitung vorzugsweise einen 90°-Bogenbereich auf. Dadurch ist eine kurze Wegstrecke für die durch den Zyklonabscheider abgeschiedene Flüssigkeit gegeben und der zur Zuleitung parallele Austritt aus der Ableitung wird sichergestellt. Die Zuleitung ist vorzugsweise geradlinig.

Vorzugsweise ist der Basiskörper im Wesentlichen zylindrisch und weist eine erste Abflachung an einer Außenseite auf, an welcher die Zuleitung angeordnet ist und weist eine zweite Abflachung an der Außenseite auf, an welcher die Ableitung angeordnet ist. Die erste und zweite Ableitung sind vorzugsweise um 180° einander entgegengesetzt an dem Basiskörper vorgesehen. Weiter bevorzugt sind in der ersten und zweiten Abflachung auch Gewindebohrungen zur Fixierung von Flanschen der Zuleitung und der Ableitung für eine einfache Anbindung der Zuleitung und der Ableitung vorhanden. Weiter bevorzugt ist auch ein Flansch an der Bodenplatte zum Abführen des Schmutzmediums aus dem Schmutzmedienanschluss vorgesehen.

Weiterhin betrifft die vorliegende Erfindung eine Gleitringdichtungsanordnung mit einem rotierenden und einem stationären Gleitring, welche zwischen sich einen Dichtspalt definieren und einen erfindungsgemäßen Zyklonabscheider, welcher ein Sperrmedium für die Gleitringdichtung bereitstellt, in dem der Auslass der Ableitung eine gereinigte Flüssigkeit als Sperrfluid für die Gleitringdichtung bereitstellt.

Ferner betrifft die Erfindung eine Pumpe mit einer Gleitringdichtungsanordnung und einem erfindungsgemäßen Zyklonabscheider.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische, perspektivische Schnittansicht eines Zyklonabscheiders im montierten Zustand in einem Rohrsystem,
- Fig. 2: eine schematische, perspektivische Schnittansicht des Zyklonabscheiders von Fig. 1, welche einen Demontagevorgang verdeutlicht,
- Fig. 3: eine schematische, perspektivische Schnittansicht des Zyklonabscheiders ohne Anschlussflansche,
- Fig. 4: eine schematische, vergrößerte Teilschnittansicht des Zyklonabscheiders von Fig. 3,
- Fig. 5: eine schematische, perspektivische Darstellung des Zyklonabscheiders von Fig. 1 und
- Fig. 6: eine schematische Darstellung einer Pumpe mit einer Gleitringdichtungsanordnung und einem Zyklonabscheider gemäß den Fig. 1 bis 5.

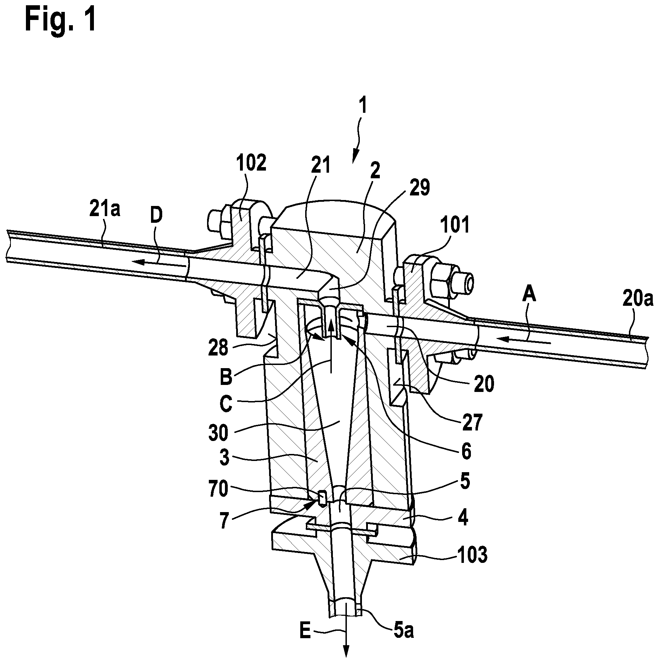

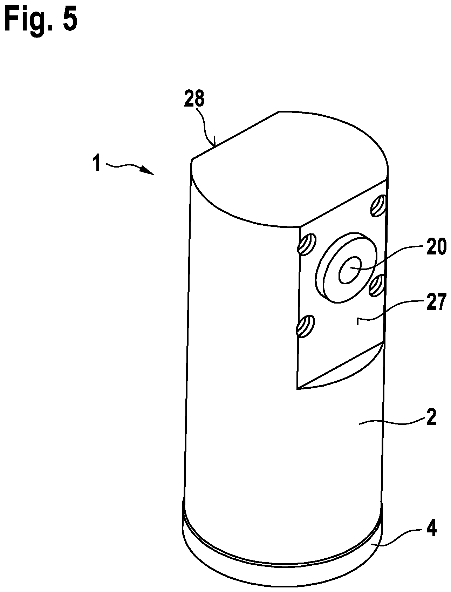

Nachfolgend wird unter Bezugnahme auf die Figuren 1 bis 6 ein Zyklonabscheider 1 gemäß einem bevorzugten Ausführungsbeispiel der Erfindung im Detail beschrieben.

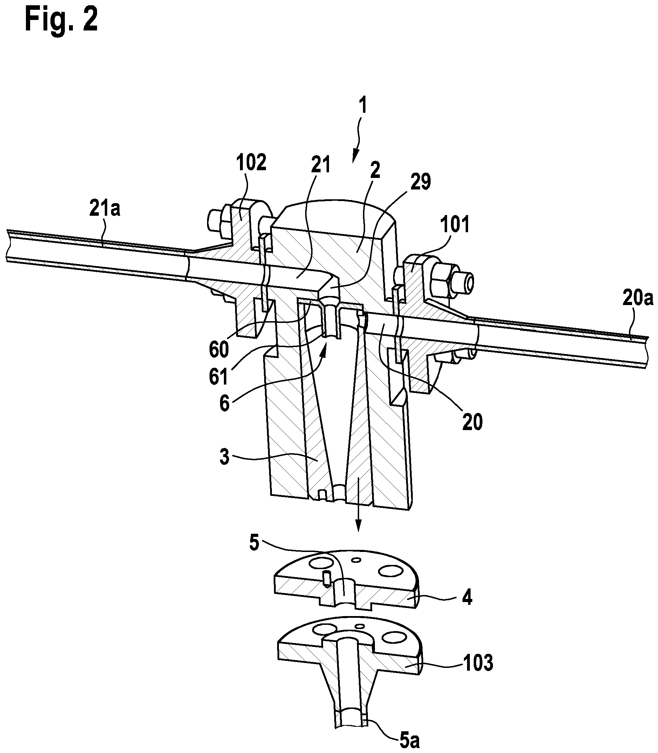

Wie insbesondere aus den Figuren 1 und 2 ersichtlich ist, umfasst der Zyklonabscheider 1 einen Basiskörper 2, einen separaten Innenkonus 3, eine Bodenplatte 4 und ein separates Steigrohr 6.

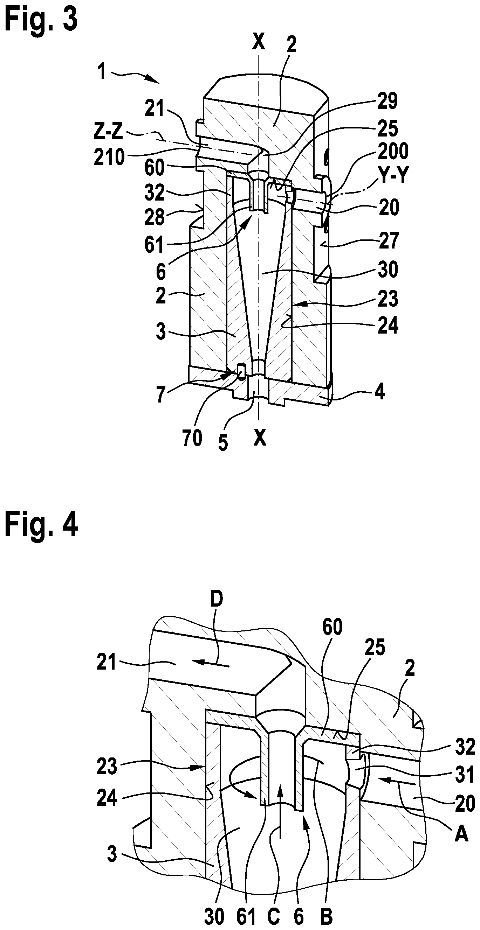

Der Aufbau des Zyklonabscheiders ist insbesondere in den Figuren 3 und 4 dargestellt. Wie aus Fig. 3 ersichtlich ist, ist der Innenkonus 3 als Bauteil mit einem konischen Hohlraum 30 ausgebildet. Ferner ist der Innenkonus 3 im Bereich des Steigrohrs 6 mit einem zylindrischen Bereich 32 vorgesehen, in welchem eine Verbindungsöffnung 31 ausgebildet ist (vgl. Fig. 4). Der Innenkonus 3 und das Steigrohr 6 sind separate Bauteile. Die Bodenplatte 4 ist beispielsweise mittels einer Schraubverbindung mit dem Basiskörper 2 lösbar verbunden. Eine Verdrehsicherung 7 mit einem Stift 70 sichert hierbei eine Verdrehung des Innenkonus gegenüber dem Basiskörper 2 bzw. der Bodenplatte 4. Wie aus Fig. 3 ersichtlich ist, ist der Stift 70 zwischen dem Innenkonus 3 und der Bodenplatte 4 vorgesehen.

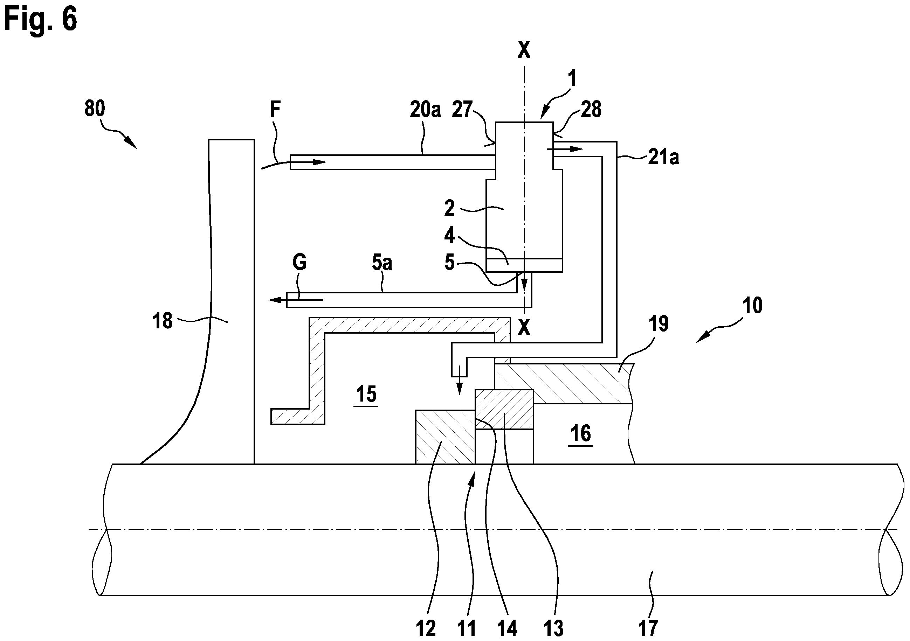

Weiterhin weist der Basiskörper 2 eine geradlinige Zuleitung 20 und eine Ableitung 21 auf. Eine Mittelachse Y-Y der Zuleitung 20 ist dabei parallel zu einer Mittelachse Z-Z der Ableitung 21 (vgl. Fig. 3). Dies wird dadurch möglich, dass die Ableitung 21 einen 90°-Bogenbereich 29 aufweist, welcher eine Umleitung des über das Steigrohr 6 vertikal zugeführte Medium um 90° ermöglicht. Somit sind ein Einlass 200 der Zuleitung 20 und ein Auslass 210 der Ableitung 21 am Basiskörper 2 um 180° zueinander entgegengesetzt angeordnet. Durch die parallele Ein- und Ausströmung am Basiskörper 2 ist somit ein einfacher Ein- und Ausbau des Zyklonabscheiders 1 in ein Rohrsystem möglich, was aus den Figuren 1 und 6 unmittelbar ersichtlich ist.

Ein Rohrsystem, in welchem der Zyklonabscheider 1 angeordnet ist, umfasst ein Zuleitungsrohr 20a, ein Ableitungsrohr 21a und ein Schmutzrohr 5a. Wie aus Fig. 1 ersichtlich ist das Zuleitungsrohr 20a mittels eines ersten Flansches 101 am Zyklonabscheider 1 fixiert. Das Ableitungsrohr 21a ist mittels eines zweiten Flansches 102 am Zyklonabscheider 1 fixiert. Ein dritter Flansch 103 fixiert das Schmutzrohr 5a am Zyklonabscheider 1.

Der Basiskörper 2 ist aus einem metallischen Material hergestellt und der Innenkonus 3 ist als separates Bauteil aus Keramik hergestellt. Zur Aufnahme des Innenkonus 3 weist der Basiskörper 2 eine sacklochartige Ausnehmung 23 auf. Die Ausnehmung 23 ist zylindrisch mit einem Wandbereich 24 und einer Grundfläche 25 ausgebildet. Die Ableitung 21 beginnt an der Grundfläche 25 und wird durch den 90°-Bogenbereich 29 um 90° umgelenkt, so dass der Auslass 210 an der Seite des Basiskörpers 2 liegt. Wie insbesondere aus Fig. 4 ersichtlich ist, ist dabei das Steigrohr 6, welches eine Basisplatte 60 und ein Rohrstück 61 aufweist, zwischen der Grundfläche 25 der Ausnehmung 23 und dem Innenkonus 3 im montierten Zustand geklemmt. Über das Steigrohr 6 wird gereinigte Flüssigkeit in die Ableitung 21 zugeführt.

Zur einfachen Montage im Rohrleitungssystem ist an einer Außenseite des Basiskörpers eine erste Abflachung 27 und gegenüber eine zweite Abflachung 28 ausgebildet. Der erste und zweite Flansch 101, 102 kann hierbei auf einfache Weise an der ersten und zweiten Abflachung 27, 28 befestigt werden.

Die Ausnehmung 23 ist als Sackloch ausgebildet und eingerichtet, den Innenkonus 3 aufzunehmen. Die Zuleitung 20 und die Ableitung 21 sind somit derart angeordnet, dass auch ein Austritt der gereinigten Flüssigkeit aus der Ableitung 21 in eine Richtung senkrecht zu einer Mittelachse X-X des Zyklonabscheiders möglich ist. Dadurch kann eine einfache Montage und Demontage des Zyklonabscheiders in ein Rohrsystem ermöglicht werden.

Zur Wartung wird der Zyklonabscheider 1 von unten durch Entfernen der Bodenplatte 4 geöffnet. Hierdurch kann der Innenkonus 3 nach unten aus dem Zyklonabscheider 1 entnommen werden. In gleicher Weise kann nach der Entnahme des Innenkonus 3 auch das Steigrohr 6 nach unten entnommen werden. Dabei ist die Rohrverbindung zur Zuleitung 20 und zur Ableitung 21 noch im voll montierten Zustand, d.h. der Zyklonabscheider 1 muss zur Wartung nicht vollständig demontiert werden, sondern der Basiskörper 2 verbleibt im Rohrsystem.

Da insbesondere das Steigrohr 6 durch abrasive Partikel in dem durch die Zuleitung 20 zugeführtem Medium stark beansprucht werden kann, ist beispielsweise ein schneller und einfacher Austausch des Steigrohrs 6 möglich. Genauso kann bei Abnutzung auch der Innenkonus 3 leicht ausgetauscht werden.

Die Funktion des Zyklonabscheiders 1 ist dabei wie folgt. Wie aus den Figuren 1 und 4 ersichtlich ist, wird ein Medium, welches Flüssigkeit und Feststoffe aufweist, durch das Zuleitungsrohr 20a in die Zuleitung 20 zugeführt (Pfeil A). Das Medium tritt durch die Verbindungsöffnung 31 in den Hohlraum 30 des Innenkonus 3 ein und wird in Umfangsrichtung umgelenkt (Pfeil B, Fig. 4). Durch die Zyklonwirkung werden die Flüssigkeit und die Feststoffe des Mediums getrennt, wobei die reine Flüssigkeit über das Steigrohr 6 abgezogen werden kann (Pfeil C) und in die Ableitung 21 zugeführt wird (Pfeil D) und über das Ableitungsrohr (21a) abgeführt wird. Die im Medium enthaltenden Feststoffe und gegebenenfalls noch etwas Flüssigkeit werden über den Schmutzmedienanschluss 5 zum Schmutzrohr 5a zugeführt (Pfeil E).

Fig. 6 zeigt eine Anwendung des Zyklonabscheiders 1 in einer Pumpenanordnung. Die Pumpenanordnung 80 umfasst ein Pumpenrad 18, welches auf einer rotierenden Welle 17 angeordnet ist. Ferner ist eine Gleitringdichtungsanordnung 10 vorgesehen, welche eine Gleitringdichtung 11 mit einem rotierenden Gleitring 12 und einem stationären Gleitring 13 aufweist. Zwischen dem rotierenden Gleitring 12 und dem stationären Gleitring 13 ist ein Dichtspalt 14 zur Abdichtung eines Produktbereichs 15 von einem Atmosphärenbereich 16 vorgesehen.

Der stationäre Gleitring 13 ist mit einem Gehäuse 19 verbunden. Die Pumpenanordnung von Fig. 6 dient zur Förderung eines Mediums, welches eine mit Feststoffen belastete Flüssigkeit ist. Das Medium wird, wie in Fig. 6 schematisch durch den Pfeil F angedeutet, vom Pumpenrad teilweise abgezogen und zum Zyklonabscheider 1 zugeführt. Hier wird das Medium in reine Flüssigkeit und Feststoffe, gegebenenfalls mit etwas Flüssigkeit getrennt. Die reine Flüssigkeit wird über das Ableitungsrohr 21a zur Gleitringdichtung 11 zugeführt, um als Sperrfluid der Gleitringdichtung 11 zu dienen. Das über den Schmutzmedienanschluss 5 abgezogene, mit Feststoffen versehene Medium wird wieder dem Pumpenrad 18 zugeführt (Pfeil G). Eine derartige Pumpenanordnung 80 wird beispielsweise in der Papierindustrie verwendet, in der eine Papierpulpe, die Wasser und Holzspäne oder dergleichen umfasst, gepumpt wird.

Somit kann der Zyklonabscheider 1 auf einfache Weise in ein Rohrsystem eingebaut werden. Auch ist eine einfache Nachrüstung möglich. Durch die Öffnung des Zyklonabscheiders 1 von unten durch Demontage der Bodenplatte 4 kann auch eine einfache Wartung oder ein einfacher Austausch von Verschleißteilen ermöglicht werden. Insbesondere kann auch ein einfacher Einbau des erfindungsgemäßen Zyklonabscheiders 1 bei sogenannten "bad actor"-Situationen ermöglicht werden, in welcher ein Zyklonabscheider für eine Gleitringdichtungsanordnung nachgerüstet werden muss, da das als Sperrfluid für die Gleitringdichtung abgezogene Medium zu viele Feststoffe enthält. Insbesondere kann auch ein Steigrohr 6 ohne komplette Demontage des Zyklonabscheiders 1 einfach, schnell und kostengünstig ausgetauscht werden.

### Bezugszeichenliste

- 1: Zyklonabscheider
- 2: Basiskörper
- 3: Innenkonus
- 4: Bodenplatte
- 5: Schmutzmedienanschluss
- 5a: Schmutzrohr
- 6: Steigrohr
- 7: Verdrehsicherung
- 10: Gleitringdichtungsanordnung
- 11: Gleitringdichtung
- 12: rotierender Gleitring
- 13: stationärer Gleitring
- 14: Dichtspalt
- 15: Produktbereich
- 16: Atmosphärenbereich
- 17: Welle
- 18: Pumpenrad
- 19: Gehäuse
- 20: Zuleitung
- 20a: Zuleitungsrohr
- 21: Ableitung
- 21a: Ableitungsrohr
- 23: Ausnehmung (Sackloch)
- 24: Wandbereich
- 25: Grundfläche
- 27: erste Abflachung
- 28: zweite Abflachung
- 29: 90°-Bogenbereich der Ableitung
- 30: Hohlraum des Innenkonus
- 31: Verbindungsöffnung des Innenkonus
- 32: zylindrischer Bereich des Innenkonus
- 60: Basisplatte
- 61: Rohrstück
- 70: Stift
- 80: Pumpenanordnung
- 101: erster Flansch
- 102: zweiter Flansch
- 103: dritter Flansch
- 200: Einlass
- 210: Auslass
- A: Zuführung eines Mediums umfassend Flüssigkeit und Feststoffe
- B: Strömung im Zyklon
- C: Abzug reine Flüssigkeit in das Steigrohr
- D: Abführen reiner Flüssigkeit in der Ableitung
- E: Abzug von Schmutzmedium durch den Schmutzmediumanschluss
- F: Abzug Medium aus einer Pumpenanordnung
- G: Rückführung Schmutzmedium zur Pumpenanordnung
- X-X: Mittelachse des Zyklonabscheiders
- Y-Y: Mittelachse der Zuleitung
- Z-Z: Mittelachse der Ableitung in Strömungsrichtung nach dem 90°-Bogenbereich

## Patentansprüche

1. Zyklonabscheider, umfassend
- einen Basiskörper (2) mit einer Zuleitung (20), einer Ableitung (21) und einer Ausnehmung (23), welche als Sackloch ausgebildet ist und zu einer Bodenseite des Basiskörpers (2) geöffnet ist,- wobei die Zuleitung (20) seitlich an einem Wandbereich (24) der Ausnehmung (23) mündet und die Ableitung (21) von einer Grundfläche (25) der Ausnehmung (23) zu einem seitlichen Auslass (210) am Basiskörper (2) führt,
- einen Innenkonus (3) mit einem Hohlraum (30), wobei der Innenkonus (3) in der Ausnehmung (23) angeordnet ist,
- eine Bodenplatte (4), welche die Ausnehmung (23) am Basiskörper (2) verschließt, wobei die Bodenplatte (4) einen Schmutzmedienanschluss (5) aufweist, und
- ein Steigrohr (6), welches an der Ableitung (21) angeordnet ist und in den Hohlraum (30) des Innenkonus (3) vorsteht,
- wobei das Steigrohr (6) ein separates Bauteil ist,
- wobei das Steigrohr (6) eine Basisplatte (60) und ein Rohrstück (61) umfasst, wobei die Basisplatte (60) zwischen dem Innenkonus (3) und der Grundfläche (25) der Ausnehmung (23) des Basiskörpers angeordnet ist, und
- wobei der Innenkonus (3) eine Verbindungsöffnung (31) aufweist, wobei die Zuleitung (20) an der Verbindungsöffnung (31) des Innenkonus mündet.

2. Zyklonabscheider nach Anspruch 1, wobei ein Einlass (200) der Zuleitung (20) und der Auslass (210) am Basiskörper (2) um 180° entgegengesetzt zueinander angeordnet sind.

3. Zyklonabscheider nach einem der vorhergehenden Ansprüche, wobei der Innenkonus (3) austauschbar ist.

4. Zyklonabscheider nach einem der vorhergehenden Ansprüche, ferner umfassend eine Verdrehsicherung (7) zwischen dem Innenkonus (3) und der Bodenplatte (4).

5. Zyklonabscheider nach Anspruch 4, wobei die Verdrehsicherung (7) einen Stift (70) umfasst, welcher teilweise im Innenkonus (3) und teilweise in der Bodenplatte (4) angeordnet ist.

6. Zyklonabscheider nach einem der vorherigen Ansprüche, wobei der Innenkonus (3) einen zylindrischen Bereich (32) aufweist, in welchem die Verbindungsöffnung (31) angeordnet ist.

7. Zyklonabscheider nach einem der vorherigen Ansprüche, wobei sich die Verbindungsöffnung (31) in Richtung zum Hohlraum (30) des Innenkonus (3) verjüngt.

8. Zyklonabscheider nach einem der vorhergehenden Ansprüche, wobei die Ableitung (21) einen 90°-Bogenbereich (29) umfasst.

9. Zyklonabscheider nach einem der vorhergehenden Ansprüche, wobei der Basiskörper (2) im Wesentlichen zylindrisch ist und eine erste Abflachung (27) an einer Außenseite aufweist, an welcher die Zuleitung (20) mündet und eine zweite Abflachung (28) an der Außenseite aufweist, in welcher die Ableitung (21) mündet .

10. Gleitringdichtungsanordnung umfassend eine Gleitringdichtung (11) mit einem rotierenden Gleitring (12) und einem stationären Gleitring (13), welche zwischen sich einen Dichtspalt (14) definieren, und einen Zyklonabscheider (1) gemäß einem der vorhergehenden Ansprüche.

11. Pumpenanordnung umfassend ein Pumpenrad (18) und eine Gleitringdichtungsanordnung (10) nach Anspruch 10.

## Claims

1. A cyclone separator, comprising
- a base body (2) with a supply line (20), a discharge line (21) and a recess (23), which is designed as a blind hole and is open to a bottom side of the base body (2),
- wherein the supply line (20) opens laterally at a wall portion (24) of the recess (23) and the discharge line (21) leads from a base area (25) of the recess (23) to a lateral outlet (210) at the base body (2),
- an inner cone (3) with a cavity (30), wherein the inner cone (3) is arranged in the recess (23), and
- a base plate (4), which closes the recess (23) at the base body (2), wherein the base plate (4) comprises a dirt media connection (5), and
- a riser pipe (6), which is arranged at the discharge line (21) and protrudes into the cavity (30) of the inner cone (3),
- wherein the riser pipe (6) is a separate component,
- wherein the riser pipe (6) comprises a base plate (60) and a pipe piece (61), wherein the base plate (60) is arranged between the inner cone (3) and the base area (25) of the recess (23) of the base body, and
- wherein the inner cone (3) comprises a connection opening (31), wherein the supply line (20) opens at the connection opening (31) of the inner cone.

2. The cyclone separator according to claim 1, wherein an inlet (200) of the supply line (20) and the outlet (210) at the base body (2) are arranged opposite to each another by 180 °.

3. The cyclone separator according to one of the preceding claims, wherein the inner cone (3) is replaceable.

4. The cyclone separator according to one of the preceding claims, further comprising a rotation lock (7) between the inner cone (3) and the base plate (4).

5. The cyclone separator according to claim 4, wherein the rotation lock (7) comprises a pin (70), which is arranged partly in the inner cone (3) and partly in the base plate (4).

6. The cyclone separator according to any of preceding claims, wherein the inner cone (3) comprises a cylindrical portion (32), in which the connecting opening (31) is arranged.

7. The cyclone separator according to any of preceding claims, wherein the connecting opening (31) tapers in the direction to the cavity (30) of the inner cone (3).

8. The cyclone separator according to one of the preceding claims, wherein the discharge line (21) comprises a 90° bend portion (29).

9. The cyclone separator according to one of the preceding claims, wherein the base body (2) is substantially cylindrical and has a first flat (27) at an outer side, at which the supply line (20) opens and has a second flat (28) at the outside, into which the discharge line (21) opens.

10. A mechanical seal arrangement comprising a mechanical seal (11) with a rotating slide ring (12) and a stationary slide ring (13), which define a sealing gap (14) between them, and a cyclone separator (1) according to one of the preceding claims.

11. A pump arrangement comprising an impeller (18) and a mechanical seal arrangement (10) according to claim 10.

## Revendications

1. Séparateur à cyclone, comprenant
- un corps de base (2) avec une conduite d'alimentation (20), une conduite d'évacuation (21) et un évidement (23) qui est conçu comme un trou borgne et qui est ouvert vers un côté inférieur du corps de base (2), - la conduite d'alimentation (20) débouchant latéralement sur une zone de paroi (24) de l'évidement (23) et la conduite d'évacuation (21) menant d'une surface de base (25) de l'évidement (23) à une sortie latérale (210) sur le corps de base (2),
- un cône intérieur (3) avec une cavité (30), le cône intérieur (3) étant agencé dans l'évidement (23),
- une plaque de fond (4) qui ferme l'évidement (23) sur le corps de base (2), la plaque de fond (4) présentant un raccordement pour les fluides polluants (5), et
- un tube montant (6) qui est agencé sur la conduite d'évacuation (21) et qui fait saillie dans la cavité (30) du cône intérieur (3),
- le tube montant (6) étant un composant séparé,
- le tube montant (6) comprenant une plaque de base (60) et un élément tubulaire (61), la plaque de base (60) étant agencée entre le cône intérieur (3) et la surface de base (25) de l'évidement (23) du corps de base, et
- le cône intérieur (3) présentant une ouverture de liaison (31), la conduite d'alimentation (20) débouchant sur l'ouverture de liaison (31) du cône intérieur.

2. Séparateur à cyclone selon la revendication 1, une entrée (200) de la conduite d'alimentation (20) et la sortie (210) sur le corps de base (2) étant agencées à 180° l'une par rapport à l'autre.

3. Séparateur à cyclone selon l'une des revendications précédentes, dans lequel le cône intérieur (3) est remplaçable.

4. Séparateur à cyclone selon l'une des revendications précédentes, comprenant en outre un dispositif anti-rotation (7) entre le cône intérieur (3) et la plaque de fond (4).

5. Séparateur à cyclone selon la revendication 4, le dispositif anti-rotation (7) comprenant une goupille (70) qui est agencée en partie dans le cône intérieur (3) et en partie dans la plaque de fond (4).

6. Séparateur à cyclone selon l'une des revendications précédentes, dans lequel le cône intérieur (3) présente une zone cylindrique (32) dans laquelle est agencée l'ouverture de liaison (31).

7. Séparateur à cyclone selon l'une des revendications précédentes, dans lequel l'ouverture de liaison (31) se rétrécit en direction de la cavité (30) du cône intérieur (3).

8. Séparateur à cyclone selon l'une des revendications précédentes, dans lequel la conduite d'évacuation (21) comprend une zone courbe à 90° (29).

9. Séparateur à cyclone selon l'une des revendications précédentes, dans lequel le corps de base (2) est essentiellement cylindrique et présente un premier aplatissement (27) sur un côté extérieur, dans lequel débouche la conduite d'alimentation (20), et un deuxième aplatissement (28) sur le côté extérieur, dans lequel débouche la conduite d'évacuation (21).

10. Dispositif d'étanchéité à anneau glissant comprenant une garniture mécanique (11) avec un anneau glissant rotatif (12) et un anneau glissant stationnaire (13), qui définissent entre eux une fente d'étanchéité (14) et un séparateur à cyclone (1) selon l'une des revendications précédentes.

11. Dispositif de pompage comprenant une roue de pompe (18) et un dispositif d'étanchéité à anneau glissant (10) selon la revendication 10.
